Europäisches Patentamt

European Patent Office

Office européen des brevets

(11) Numéro de publication : **0 069 039**
**B1**

# (12) FASCICULE DE BREVET EUROPÉEN

(45) Date de publication du fascicule du brevet :
02.03.88

(51) Int. Cl.⁴ : **F 01 B  3/08**, F 02 B 75/32,
F 01 D  1/34, F 02 B 37/10

(21) Numéro de dépôt : **82440014.7**

(22) Date de dépôt : **28.05.82**

(54) Moteur à combustion interne suralimenté.

(30) Priorité : 03.06.81 FR 8111121
23.11.81 FR 8122013

(43) Date de publication de la demande :
05.01.83 Bulletin 83/01

(45) Mention de la délivrance du brevet :
02.03.88 Bulletin 88/09

(84) Etats contractants désignés :
**AT BE CH DE GB IT LI LU NL SE**

(56) Documents cités :
DE-A- 2 552 575
DE-C-  587 255
FR-A-  402 844
FR-A-  559 631
FR-A-  975 950
FR-A- 2 131 788
FR-E-   34 070
US-A- 3 181 308

(73) Titulaire : **Wilhelm, Camille**
**8 rue du Ruisseau Bleu**
**F-67100 Strasbourg-Neudorf (FR)**

**Wilhelm, Camille**
**107 rue des Prés**
**F-67380 Lingolsheim (FR)**

**Wilhelm, Robert**
**7 rue de Rangen**
**F-67200 Strasbourg-Cronenbourg (FR)**

(72) Inventeur : **Wilhelm, Camille**
**8 rue du Ruisseau Bleu**
**F-67100 Strasbourg-Neudorf (FR)**
Inventeur : **Wilhelm, Camille**
**107 rue des Prés**
**F-67380 Lingolsheim (FR)**
Inventeur : **Wilhelm, Robert**
**7 rue de Rangen**
**F-67200 Strasbourg-Cronenbourg (FR)**

(74) Mandataire : **Nuss, Pierre**
**10, rue Jacques Kablé**
**F-67000 Strasbourg (FR)**

EP 0 069 039 B1

Jouve, 18, rue St-Denis, 75001 Paris, France

## Description

La présente invention concerne le domaine des machines thermiques, en particulier des moteurs à combustion interne, et a pour objet un tel moteur suralimenté.

Actuellement, les moteurs existants de ce type sont généralement équipés d'un compresseur ou d'un turbo-compresseur entraîné mécaniquement ou par l'intermédiaire des gaz d'échappement, et présentant des cylindres pouvant être disposés de diverses manières, et dans lesquels se déplacent des pistons alternatifs reliés à un système d'embiellage.

Cependant, dans ces moteurs connus, la plage d'utilisation à un régime économique, c'est-à-dire à un rendement énergétique optimal, est très faible, et seule leur utilisation à haut régime est avantageuse.

En outre, ces moteurs connus sont exposés à une usure rapide de leurs organes en mouvement du fait des pressions et des températures de fonctionnement.

En outre, il est également connu, par DE-A-2 552 575, un moteur comportant un piston alternatif et rotatif solidaire en rotation d'un arbre moteur. Dans ce mode de réalisation, la rotation du piston est assurée par une came creusée dans le pourtour du piston et coopérant avec un doigt de guidage sous l'effet de la pression s'exerçant sur la face du piston. Un moteur ainsi réalisé présente également l'inconvénient d'un faible rendement dû à des pertes de fonctionnement très élevées.

La présente invention a pour but de pallier ces inconvénients.

Elle a, en effet, pour objet un moteur à combustion interne suralimenté, constitué par un cylindre formé par deux parties identiques, assemblées entre elles, symétriques suivant un axe perpendiculaire à son axe longitudinal, et traversé suivant cet axe longitudinal, par un arbre moteur, par deux pistons alternatifs rotatifs guidés dans le cylindre et sur l'arbre moteur, et entraînant ce dernier en rotation, caractérisé en ce qu'il comporte deux chambres d'explosion disposées chacune à une extrémité du cylindre, sur sa périphérie, dans chacune desquelles se déplace un piston alternatif, et dans lesquelles débouche un injecteur de carburant, un turbo-compresseur entraîné mécaniquement par l'arbre moteur, et dont les sorties d'air sont reliées aux tubulures d'aspiration de chaque partie de cylindre, et deux orifices d'échappement à soupape commandée reliés chacun à une tubulure d'échappement, le cylindre étant entouré, de manière connue en soi, d'un dispositif de refroidissement à air forcé ou à eau, et caractérisé en ce que près de son extrémité tournée vers l'extrémité de cylindre, chaque piston présente un aubage s'étendant sur la moitié de sa circonférence, et à son extrémité opposée sur sa partie d'enveloppe diamétralement opposée à l'aubage, le piston est muni d'au moins un, de préférence de deux secteurs curvilignes identiques formant cames de déplacement alternatif du piston en coopération avec deux guides fixes du cylindre, et en ce que l'aubage de chaque piston est taillé dans l'extrémité desdits pistons de manière à délimiter entre deux aubes consécutives à chaque fois une chambre dont la partie ouverte est fermée par la surface intérieure du cylindre, et dont l'étanchéité est assurée grâce à des lamelles d'étanchéité prévues sur chaque crête des aubes, le volume total délimité par les aubes correspondant au volume de la chambre d'explosion.

Conformément à une variante de réalisation de l'invention l'entraînement du turbo-compresseur est un entraînement débrayable automatiquement et accouplé à une turbine actionnée par les gaz d'échappement issus de chaque partie de cylindre, de sorte que, dès atteinte d'une pression et d'une vitesse d'entraînement suffisantes, l'entraînement n'est plus réalisé par l'arbre moteur.

Selon une autre caractéristique de l'invention, chaque partie de cylindre est pourvue d'une soupape de sûreté disposée avant la chambre d'explosion, sensiblement symétriquement à la soupape d'échappement, et destinée à éviter une surcompression néfaste en cas de non fonctionnement ou de fonctionnement défectueux de la soupape d'échappement.

Conformément à une autre variante de réalisation de l'invention, les cylindres et les pistons sont disposés perpendiculairement à l'arbre moteur et sont accouplés à ce dernier grâce à des arbres moteurs secondaires et à :

des renvois d'angle, et leurs cycles de travail sont décalés, et leurs chambres d'explosion sont alimentées chacune par une turbine d'un turbo-compresseur double turbine à entraînement mécanique débrayable et par les gaz d'échappement.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation latérale, partiellement en coupe, d'un moteur conforme à l'invention ;

la figure 2 est une vue en élévation frontale et en coupe du moteur de la figure 1, à plus grande échelle ;

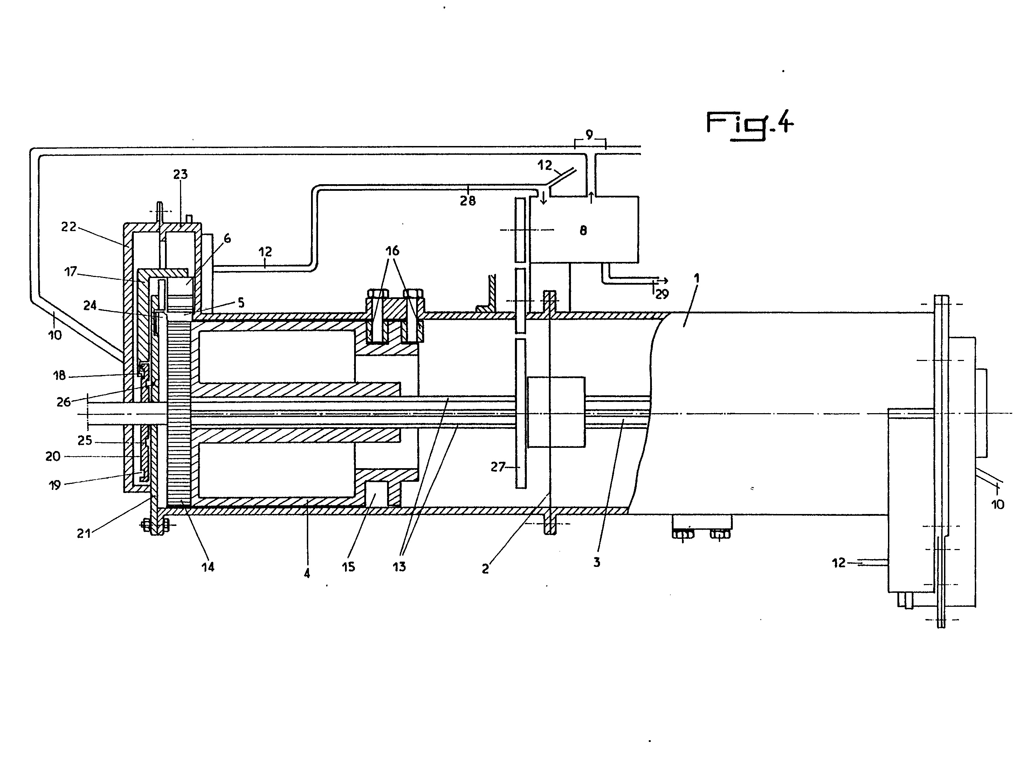

la figure 3 est une vue en élévation latérale d'un piston alternatif rotatif, également à plus grande échelle ;

la figure 4 est une vue en élévation latérale d'un moteur muni d'un turbo-compresseur débrayable ;

la figure 5 est une vue en coupe et en élévation frontale du moteur de la figure 4, et

la figure 6 est une vue en élévation latérale et en coupe d'une variante de réalisation de l'invention.

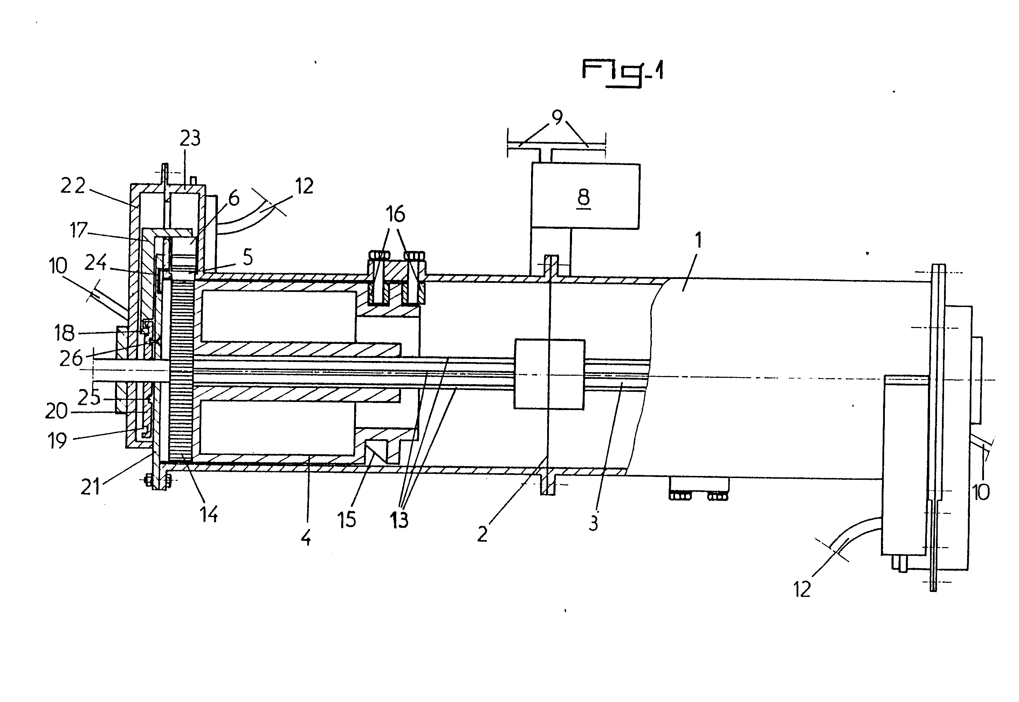

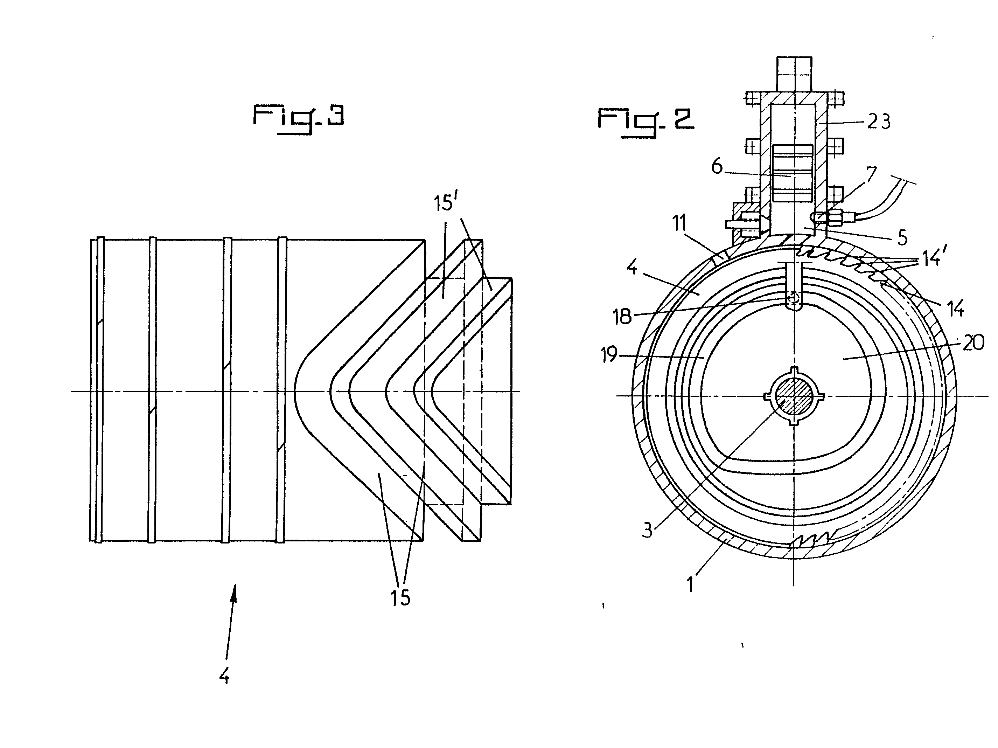

Conformément à l'invention, et comme le montre plus particulièrement, à titre d'exemple, les figures 1 et 2 des dessins annexés, le moteur à combustion interne suralimenté est essentiellement constitué par un cylindre 1 formé par deux parties identiques assemblées entre elles suivant un joint 2 et symétriques par rapport à ce joint, par un arbre moteur 3 s'étendant coaxialement à l'intérieur du cylindre 1 et portant deux pistons 4 alternatifs et rotatifs, qui sont guidés à l'intérieur du cylindre 1 et sur l'arbre moteur 3, et entraînent ce dernier en rotation.

A chaque extrémité, le cylindre 1 est muni, d'une chambre d'explosion 5, disposée sur sa périphérie, dans laquelle se déplace un piston alternatif 6, et dans laquelle débouche un injecteur de carburant 7. Sur la partie centrale du cylindre 1 est monté un turbo-compresseur 8, qui est entraîné mécaniquement par l'arbre moteur 3, et dont les sorties d'air 9 sont reliées aux tubulures 10 d'aspiration de chaque partie de cylindre, qui est munie, en outre, d'un orifice d'échappement 11 à soupape commandée relié à une tubulure d'échappement 12. Le cylindre 1 et les chambres d'explosion 5 sont, en outre, entourés, de manière connue en soi, par un dispositif de refroidissement à air forcé ou à eau non représenté.

Les pistons 4 sont solidaires en rotation de l'arbre 3 et déplaçables en translation grâce à une liaison à cannelures 13, ou à rainure et clavette, ou toute autre liaison en rotation permettant une translation.

Près de son extrémité tournée vers l'extrémité de cylindre 1, chaque piston 4 présente un aubage 14 s'étendant sur la moitié de sa circonférence, et à son extrémité opposée sur sa partie d'enveloppe diamétralement opposée à l'aubage 14, le piston est muni d'au moins un, de préférence de deux secteurs curvilignes 15 identiques formant cames de déplacement alternatif du piston 4 en coopération avec deux guides fixes 16 du cylindre 1.

Le piston 6 de la chambre de compression 5 est solidaire d'une extrémité d'une bielle coudée 17 dont l'autre extrémité est sous forme d'un maneton 18 s'engageant dans une rainure curviligne 19 d'un disque de came 20 solidaire de l'arbre moteur 3.

Sur la face du disque 20 opposée à celle portant la rainure 19, le disque 20 est muni d'une rainure circulaire 25 portant sur une partie de sa circonférence une came d'actionnement d'une soupape 26 reliée à la tubulure 10 et à travers laquelle l'air comburant est injecté dans le cylindre 1 lors du retrait du piston 4.

Le cylindre 1 est fermé à ses deux extrémités par une plaque de fermeture étanche 21, et le disque de came 20 ainsi que la bielle coudée 17 s'étendent à l'extérieur de cette plaque dans un carter étanche 22 relié au cylindre 23 de la chambre de compression 5.

Le turbo-compresseur 8 est entraîné, de préférence avec surmultiplication, par l'arbre moteur 3 au moyen d'un train d'engrenages traversant le cylindre 1 au niveau du joint 2.

L'aubage 14 de chaque piston 4 est taillé dans l'extrémité desdits pistons de manière à délimiter entre deux aubes consécutives à chaque fois une chambre dont la partie ouverte est fermée par la surface intérieure du cylindre 1, et dont l'étanchéité est assurée grâce à des lamelles d'étanchéité 14' prévues sur chaque crête des aubes. Le volume total délimité par les aubes correspond au volume de la chambre d'explosion 5 au moment de ladite explosion, de sorte que les gaz de combustion, qui se détendent alors, exercent une impulsion sur chaque chambre individuelle ainsi délimitée pour provoquer la rotation des pistons 4 en sens inverse des aiguilles d'une montre (figure 2). Pendant un demi-tour les pistons 4 tournent sur eux-mêmes sans translation, étant guidés par les rainures semi-circulaires 15' reliant les extrémités des rainures 15. Puis les pistons 4 se déplacent en translation en direction du joint 2 du cylindre 1, les gaz subsistant dans les aubes.

Simultanément à la rotation des pistons 4 et à la détente des gaz dans les aubages 14, les pistons 6 des chambres 5 sont déplacés en direction du cylindre 1 par les bielles 17 sous l'action du disque 20 et les soupapes d'échappement restent fermées.

L'air comburant est amené à l'intérieur du cylindre 1 lors de la translation des pistons 4 en direction du joint 2. Après un quart de tour des pistons 4, qui les amène au point mort arrière, ces pistons se déplacent à nouveau en direction des plaques de fermeture 21 et réalisent une nouvelle compression de l'air dans la chambre 5, qui est reliée à la face interne de la plaque de fermeture 21 par un canal de liaison annexe 24 permettant le passage de tout l'air contenu dans le cylindre 1 vers la chambre 5. Une autre explosion se produit alors et la pression engendrée s'ajoute à celle contenue dans les aubes avec une nouvelle impulsion, et la soupape d'échappement est commandée à l'ouverture pour permettre le passage des gaz à travers les tubulures d'échappement 12. La soupape d'échappement reste alors ouverte sur 270° de rotation des pistons 4.

La commande des soupapes d'échappement est réalisée de telle manière que ces dernières ouvrent pendant une rotation de 270° des pistons 4 tous les deux cycles. En outre, les sièges de ces soupapes sont munis d'orifices de balayage pour un air de refroidissement provenant d'une tubulure annexe reliée aux sorties d'air du turbocompresseur 8.

Ainsi, lors de l'échappement le siège et les aubes sont continuellement balayés par un air frais, et lors de l'admission d'air consécutive, un supplément d'air comburant est injecté dans le cylindre 1.

Conformément à une variante de réalisation de l'invention, il est possible de réaliser un moteur constitué par plusieurs cylindres 1 disposés côte à côte et dont les arbres moteurs sont reliés mécaniquement entre eux et/ou avec un arbre de transmission principal, le cycle des pistons de chaque cylindre étant alors avantageusement décalé par rapport à celui des autres pistons de manière à obtenir une plus grande souplesse de fonctionnement.

Selon une autre variante de réalisation de l'invention, et comme le montre la figure 4 des dessins annexés, le turbo-compresseur 8 entraîné mécaniquement par l'intermédiaire d'un train surmultiplicateur 27 est muni, en outre, d'une tubulure 28 d'admission des gaz d'échappement des deux parties de cylindres, reliée aux tubulures 12 d'échappement de ces parties, et dirigeant lesdits gaz d'échappement sur une turbine d'entraînement du compresseur 8, ces gaz étant évacués à travers une tubulure 29.

Ainsi, aux basses pressions et vitesses des gaz d'échappement, disponibles lorsque le moteur tourne à bas régime, le turbocompresseur 8 est entraîné au moyen du train surmultiplicateur 27, et dès atteinte d'une pression et d'une vitesse d'entraînement suffisantes, ledit entraînement n'est plus réalisé mécaniquement par l'arbre moteur, mais par l'intermédiaire de la turbine d'entraînement du turbo-compresseur 8.

Le débrayage du train 27 peut être réalisé soit entièrement de manière mécanique, par exemple par un montage du type roue libre de l'un des pignons du train 27, soit encore grâce à un embrayage électromagnétique déclenché par un contact manométrique, ou analogue.

Afin d'éviter des surcompressions néfastes, en particulier en cas de non fonctionnement ou de mauvais fonctionnement de la soupape d'échappement 30, il est prévu, comme le montre la figure 5, sur chaque partie de cylindre, une soupape de sûreté 31 disposée avant la chambre d'explosion 5, sensiblement symétriquement à la soupape d'échappement 30, et réglable, soit manuellement, soit au moyen d'un dispositif commandé électriquement ou électroniquement en fonction des pressions engendrées dans les aubages 14 des pistons 4. Cette soupape 31 est constituée par un corps de soupape 32 présentant une section trapézoïdale à grande base tournée vers l'extérieur, permettant une ouverture facile sous l'effet de la pression, par une tige de guidage 33, et par un ressort de rappel 34 dont la charge peut être tarée de manière connue, en fonctionnement ou à l'arrêt du moteur.

En outre, selon une autre caractéristique de l'invention, entre la chambre d'explosion 5 et l'intérieur du cylindre 1, il est prévu une soupape basculante 43 (figure 5) d'obturation de l'orifice de détente de la chambre 4, cédant à la pression des gaz de combustion contre l'action d'un ressort de rappel (non représenté), et actionnée à l'ouverture au moyen d'une tige 35 coopérant avec une came d'ouverture 36 prévue dans le carter étanche 22 sur le disque 20 entraîné par l'arbre moteur 3, cette came 36 réalisant le basculement à l'ouverture de la soupape 43 pendant une rotation de 180° des pistons 4, c'est-à-dire pendant la phase d'aspiration et de remplissage de la chambre 5, la pression des gaz après l'explosion réalisant une ouverture momentanée de la soupape 43 au passage de la chambre déterminée par deux aubes consécutives de l'aubage 14 devant l'orifice de la chambre 5.

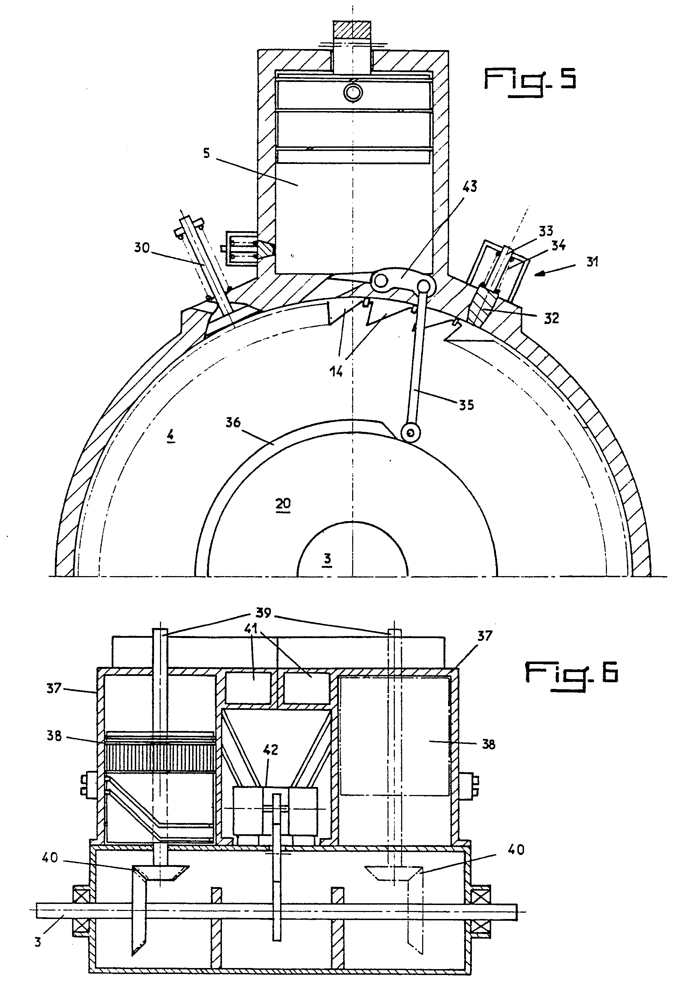

La figure 6 représente une autre variante de réalisation de l'invention, dans laquelle deux ensembles cylindre 37 et piston 38 sont disposés perpendiculairement à l'arbre moteur 3 et sont accouplés à ce dernier au moyen d'arbres moteurs secondaires 39 et de renvois d'angle 40, et leurs cycles de travail sont décalés.

Les chambres d'explosion 41 de ces ensembles cylindre 37-piston 38 sont alimentées chacune par une turbine d'un turbo-compresseur 42 à double turbine du type à entraînement débrayable mécanique et par les gaz d'échappement précité.

Dans ce mode de réalisation, la disposition des divers éléments d'une partie de cylindre reste identique à celle décrite à propos du premier exemple de réalisation, seule la position relative des pistons 38 dans les cylindres 37 étant différente. En effet, dans une telle construction, l'un des pistons peut être en position haute d'explosion et de détente pendant que l'autre est en position basse d'admission de mélange combustible, de sorte qu'est obtenu un cycle de travail plus régulier avec une moindre génération de vibration ; le cycle sans travail d'aspiration et de compression de l'un des pistons étant compensé par le cycle de travail d'explosion et détente de l'autre piston.

Ainsi, il est réalisé un travail permanent sur l'arbre moteur 3 pendant une rotation complète des pistons 38 sans à-coup dû à l'inertie des pièces en mouvement, de sorte qu'un volant d'inertie est inutile, et qu'est obtenue une grande souplesse de fonctionnement.

Selon une autre caractéristique de l'invention, il est possible de disposer plusieurs ensembles cylindre-piston perpendiculairement à l'arbre moteur, en ligne, en V, à plat, ou en étoile, ces ensembles étant alimentés par un ou plusieurs turbo-compresseurs à entraînement mécanique débrayable et par les gaz d'échappement, le cycle des pistons pouvant être décalé d'un cylindre à l'autre individuellement, ou par groupe de cylindres.

Grâce à un tel mode de réalisation, la souplesse du moteur peut encore être accrue, de même que son rendement mécanique.

Il est également possible, conformément à une autre caractéristique de l'invention, de commander le dispositif d'injection au moyen d'un dispositif de démultiplication de manière à réaliser une injection de carburant dans la chambre d'explosion 5 tous les deux tours. Ainsi, lors du premier passage de l'aubage 14 des pistons devant les chambres d'explosion 5, ledit aubage est uniquement rempli d'air comburant comprimé, qui est mélangé aux gaz d'explosion lors du second passage et favorise une meilleure combustion de ces derniers, de sorte que le rendement énergétique du moteur est amélioré.

Grâce à l'invention, il est possible de réaliser un moteur à combustion suralimenté permettant l'obtention d'un rendement optimal quel que soit le régime, et dans lequel les vibrations sont supprimées dans une large mesure du fait que les pistons travaillent en symétrie.

En outre, du fait de la constitution et du mode de fonctionnement du moteur conforme à l'invention, une ovalisation de l'ensemble cylindre et pistons ne peut pas se produire contrairement aux moteurs à pistons alternatifs connus.

## Revendications

1. Moteur à combustion interne suralimenté, constitué par un cylindre (1) formé par deux parties identiques, assemblées entre elles, symétriques suivant un axe perpendiculaire à son axe longitudinal, et traversé suivant cet axe longitudinal, par un arbre moteur (3), par deux pistons alternatifs rotatifs (4) guidés dans le cylindre (1) et sur l'arbre moteur (3), et solidaires en rotation de ce dernier et déplaçables en translation grâce à une liaison à cannelures (13) ou à rainure et clavette, ou toute autre liaison en rotation permettant une translation, caractérisé en ce qu'il comporte deux chambres d'explosion (5) disposées chacune à une extrémité du cylindre (1), sur sa périphérie, dans chacune desquelles se déplace un piston alternatif (6), et dans lesquelles débouche un injecteur de carburant (7), un turbo-compresseur (8) entraîné mécaniquement par l'arbre moteur (3), de préférence avec surmultiplication, au moyen d'un train d'engrenage traversant le cylindre (1) au niveau du joint (2), et dont les sorties d'air (9) sont reliées aux tubulures d'aspiration (10) de chaque partie de cylindre (1), et deux orifices d'échappement (11) à soupape commandée reliés chacun à une tubulure d'échappement (12), le cylindre étant entouré, de manière connue en soi, d'un dispositif de refroidissement à air forcé ou à eau, et en ce que près de son extrémité tournée vers l'extrémité de cylindre (1), chaque piston (4) présente un aubage (14) s'étendant sur la moitié de sa circonférence, et à son extrémité opposée sur sa partie d'enveloppe diamétralement opposée à l'aubage (14), le piston est muni d'au moins un de préférence de deux secteurs curvilignes (15) identiques formant cames de déplacement alternatif du piston (4) en coopération avec deux guides fixes (16) du cylindre (1), et en ce que l'aubage (14) de chaque piston (4) est taillé dans l'extrémité desdits pistons de manière à délimiter entre deux aubes consécutives à chaque fois une chambre dont la partie ouverte est fermée par la surface intérieure du cylindre (1), et dont l'étanchéité est assurée grâce à des lamelles d'étanchéité (14) prévues sur chaque crête des aubes, le volume total délimité par les aubes correspondant au volume de la chambre d'explosion (5).

2. Moteur, suivant la revendication 1, caractérisé en ce que le piston (6) de la chambre de compression (5) est solidaire d'une extrémité d'une bielle coudée (17) dont l'autre extrémité est sous forme d'un maneton (18) s'engageant dans une rainure curviligne (19) d'un disque de came (20) solidaire de l'arbre moteur (3), et en ce que le cylindre (1) est fermé à ses deux extrémités par une plaque de fermeture étanche (21), et le disque de came (20) ainsi que la bielle coudée

(17) s'étendent à l'extérieur de cette plaque dans un carter étanche (22) relié au cylindre (23) de la chambre de compression (5).

3. Moteur, suivant la revendication 1, caractérisé en ce que la commande des soupapes d'échappement est réalisée de telle manière que ces dernières ouvrent pendant une rotation de 270° des pistons (4) tous les deux cycles, et les sièges de ces soupapes sont munis d'orifices de balayage pour un air de refroidissement provenant d'une tubulure annexe reliée aux sorties d'air du turbo-compresseur (8), de sorte que, lors de l'échappement, le siège et les aubes sont continuellement balayés par un air frais, et lors de l'admission d'air consécutive, un supplément d'air comburant est injecté dans ce cylindre (1).

4. Moteur, suivant la revendication 1, caractérisé en ce que sur la face du disque (20) opposée à celle portant la rainure (19), le disque (20) est muni d'une rainure circulaire (25) portant sur une partie de sa circonférence une came d'actionnement d'une soupape (26) reliée à la tubulure (10) et à travers laquelle l'air comburant est injecté dans le cylindre (1) lors du retrait du piston (4).

5. Moteur à combustion interne suralimenté, suivant l'une quelconque des revendications 1 à 4, caractérisé en ce que l'entraînement (27) du turbo-compresseur (8) est un entraînement débrayable automatiquement et accouplé à une turbine actionnée par les gaz d'échappement issus de chaque partie de cylindre, de sorte que, dès atteinte d'une pression et d'une vitesse d'entraînement suffisantes, l'entraînement n'est plus réalisé par l'arbre moteur (3).

6. Moteur, suivant l'une quelconque des revendications 1 à 5, caractérisé en ce qu'il est constitué par plusieurs ensembles cylindre (37), piston (38) disposés perpendiculairement à l'arbre moteur (3), en ligne, en V, à plat, ou en étoile, et accouplés à ce dernier grâce à des arbres moteurs secondaires (39) et à des renvois d'angle (40), et leurs cycles de travail sont décalés individuellement ou par groupes de cylindres, et leurs chambres d'explosion (41) sont alimentées chacune par une turbine d'un turbo-compresseur (42) double turbine à entraînement mécanique débrayable et par les gaz d'échappement.

7. Moteur, suivant la revendication 5, caractérisé en ce que le turbo-compresseur (8) entraîné mécaniquement par l'intermédiaire d'un train surmultiplicateur (27) est muni, en outre, d'une tubulure (28) d'admission des gaz d'échappement des deux parties de cylindres, reliée aux tubulures (12) d'échappement de ces parties, et dirigeant lesdits gaz d'échappement sur une turbine d'entraînement du turbo-compresseur (8), ces gaz étant évacués à travers une tubulure (29).

8. Moteur, suivant l'une quelconque des revendications 5 à 7, caractérisé en ce que le débrayage du train (27) peut être réalisé soit entièrement de manière mécanique, par exemple par un montage du type roue libre de l'un des pignons du train (27), soit encore grâce à un embrayage électromagnétique déclenché par un contact manométrique ou analogue.

9. Moteur, suivant la revendication 5, caractérisé en ce que afin d'éviter des surcompressions néfastes, en particulier en cas de non fonctionnement ou de mauvais fonctionnement de la soupape d'échappement (30), il est prévu, sur chaque partie de cylindre, une soupape de sûreté (31) disposée avant la chambre d'explosion (5), sensiblement symétriquement à la soupape d'échappement (30), et réglable, soit manuellement, soit au moyen d'un dispositif commandé électriquement ou électroniquement en fonction des pressions engendrées dans les aubages (14) des pistons (4), et en ce que cette soupape de sûreté (31) est constituée par un corps de soupape (32) présentant une section trapézoïdale à grande base tournée vers l'extérieur permettant une ouverture facile sous l'effet de la pression, par une tige de guidage (33), et par un ressort de rappel (34) dont la charge peut être tarée de manière connue, en fonctionnement ou à l'arrêt du moteur.

10. Moteur, suivant l'une quelconque des revendications 5 et 9, caractérisé en ce que, entre la chambre d'explosion (5) et l'intérieur du cylindre (1), il est prévu une soupape basculante (43) d'obturation de l'orifice de détente de la chambre (4), cédant à la pression des gaz de combustion contre l'action d'un ressort de rappel, et actionnée à l'ouverture au moyen d'une tige (35) coopérant avec une came d'ouverture (36) prévue dans le carter étanche (22) sur le disque (20) entraîné par l'arbre moteur (3), cette came (36) réalisant le basculement à l'ouverture de la soupape (43) pendant une rotation de 180° des pistons (4), c'est-à-dire pendant la phase d'aspiration et de remplissage de la chambre (5), la pression des gaz après l'explosion réalisant une ouverture momentanée de la soupape (43) au passage de la chambre déterminée par deux aubes consécutives de l'aubage (14) devant l'orifice de la chambre (5).

11. Moteur, suivant l'une quelconque des revendications 1 à 10, caractérisé en ce que le dispositif d'injection est commandé au moyen d'un dispositif de démultiplication de manière à réaliser une injection de carburant dans la chambre d'explosion (5) tous les deux tours.

## Claims

1. A supercharged internal combustion engine consisting of a cylinder (1) formed by two identical portions assembled together and symmetrical along an axis perpendicular to its longitudinal axis, the cylinder being traversed along this longitudinal axis by a driving shaft (3) and by two rotary reciprocating pistons (4) guided in the cylinder (1) and on the driving shaft (3) and rigidly connected to the latter for rotation therewith and displaceable in translation thanks to a splined connection (13) or a key and keyway connection or any other rotational connection permitting translation, characterised in that it comprises two combustion chambers (5) which are each disposed at one end of the cylinder (1), at its periphery, in each of which there is displaced a reciprocating piston (6) and into each of which there opens a fuel injector (7), a turbo-compressor (8) driven mechanically by the driving shaft (3), preferably with overdrive, by means of a gear train passing through the cylinder (1) at the level of the joint (2), and the air outlets (9) of which are connected to the suction manifolds (10) of each cylinder portion (1), and two exhaust ports (11) with a controlled value, each connected to an exhaust manifold (12), the cylinder being surrounded, in a manner known per se, by a forced air or water cooling device and in that, close to its end facing towards the end of the cylinder (1), each piston (4) comprises blading (14) extending over half its circumference and, at its opposite end, over the portion of its shell diametrically opposite to the blading (14), the piston is equipped with at least one and preferably two identical curvilinear sectors (15) forming cams for the reciprocating displacement of the piston (4) in cooperation with two fixed guides (16) of the cylinder (1) and in that the blading (14) of each piston (4) is cut into the end of said pistons in such a manner as to define, between each two consecutive blades, a chamber of which the open portion is closed by the internal surface of the cylinder (1) and the tightness of which is ensured by means of sealing strips (14) provided on the crest of each of the blades, the total volume defined by the blades corresponding to the volume of the combustion chamber (5).

2. An engine according to Claim 1, characterised in that the piston (6) of the compression chamber (5) is rigidly connected to one end of a bent connecting rod (17), the other end of which is in the form of a crank pin (18) engaging in a curvilinear groove (19) in a cam plate (20) rigidly connected to the driving shaft (3) and in that the cylinder (1) is closed at its two ends by a sealed closing plate (21), and the cam plate (20) as well as the bent connecting rod (17) extend outside this plate in a sealed case (22) connected to the cylinder (23) of the compression chamber (5).

3. An engine according to Claim 1, characterised in that the control of the exhaust valves is effected in such a manner that the latter open during a rotation of 270° of the pistons (4) every other cycle and the seats of these valves are equipped with scavenging ports for cooling air coming from an adjoining manifold connected to the air outlets of the turbo-compressor (8) so that, during the exhaust, the seat end the blades are continuously swept by fresh air and during the following admission of air additional combustion air is injected into this cylinder (1).

4. An engine according to Claim 1, characterised in that, on the face of the plate (20) opposite to that carrying the groove (19), the plate (20) is equipped with a circular groove (25) carrying, over a portion of its circumference, a cam for actuating a valve (26) connected to the manifold (10) and through which the combustion air is injected into the cylinder (1) during the withdrawal of the piston (4).

5. A supercharged internal combustion engine according to any one of the Claims 1 to 4, characterised in that the drive (27) of the turbo-compressor (8) is a drive which can be disconnected automatically and which is coupled to a turbine actuated by the exhaust gases leaving each portion of the cylinder in such a manner that as soon as a sufficient pressure and driving speed have been reached, the drive is no longer effected by the driving shaft (3).

6. An engine according to any one of the Claims 1 to 5, characterised in that it consists of a plurality of cylinder (37), piston (38) units disposed perpendicular to the driving shaft (3), in line, in a V, flat, or in a star, and coupled to the latter by means of secondary drive shafts (39) and bevel gears (40) and their working cycles are staggered individually or in groups of cylinders and their combustion chambers (41) are each fed by a turbine of a double-turbine turbo-compressor (42) with disconnectable mechanical drive and by the exhaust gases.

7. An engine according to Claim 5, characterised in that the turbo-compressor (8) driven mechanically by means of an overdrive train (27) is further equipped with an admission manifold (28) for the exhaust gases of the two cylinder portions, which manifold is connected to the exhaust manifolds (12) of these portions, and directs said exhaust gases towards a turbine driving the turbo-compressor (8), these gases being evacuated through a manifold (29).

8. An engine according to any one of the Claims 5 to 7, characterised in that the disconnection of the train (27) may be effected either entirely in a mechanical manner for example through a free-wheel type mounting of one of the pinions of the train (27) or by means of an electromagnetic clutch disengaged by a monometric contact or the like.

9. An engine according to Claim 5, characterised in that in order to avoid harmful supercharging, particularly in the event of non-functioning or malfunctioning of the exhaust valve (30), there is provided, on each cylinder portion, a safety valve (31) disposed in front of the combustion chamber (5), substantially symmetrically with the exhaust valve (30) and adjustable, either manually or by means of a device controlled electrically or electronically, depending on the pressures generated in the blading (14) of the pistons (4) and in that this safety valve (31) consists of a valve body (32) having a trapezoidal section with a large base facing towards the outside, permitting easy opening under the effect of the pressure, of a guide rod (33) and of a return spring (34), the loading of which can be calibrated in known manner, when the engine is in operation or stopped.

10. An engine according to any one of the Claims 5 and 9, characterised in that, between the combustion chamber (5) and the interior of the cylinder (1) there is provided a rocking valve (43) closing the expansion port of the chamber (4) yielding to the pressure of the combustion gases against the action of a return spring and actuated in the opening sense by means of a rod (35) cooperating with an opening cam (36) provided in the sealed case (22) on the plate (20) driven by the driving shaft (3), this cam (36) effecting the rocking for opening the valve (43) during a rotation through 180° of the pistons (4) that is to say during the suction and filling phase of the chamber (5), the pressure of the gases after the combustion causing a momentary opening of the valve (43) on passage of the chamber determined by two consecutive blades of the blading (14) in front of the port of the chamber (5).

11. An engine according to any one of the Claims 1 to 10, characterised in that the injection device is controlled by means of a reduction device in such a manner as to effect an injection of fuel into the combustion chamber (5) on every other revolution.

**Patentansprüche**

1. Aufgeladene Brennkraftmaschine bestehend aus einem Zylinder (1) der aus zwei identischen, zusammenmontierten Teilen gebildet ist, die um eine zur Motorenlängsachse (3) senkrecht stehende und diese schneidende Achse symmetrisch angeordnet sind, aus zwei sich hin- und herdrehende Kolben (4) die innerhalb des Zylinders (1) und auf der Antriebswelle (3) des Motors geführt sind, und die drehfest mit der Welle (3) verbunden sind und dank einer Verbindung mit Kerbverzahnung (13), mit Nut und Feder oder mit anderen Mitteln, eine Längsverschiebung erlauben, dadurch gekennzeichnet, dass sie aus je einer Explosionskammer (5) die an den zwei Enden des Zylinders (1) am Umfang angeordnet sind, in denen je ein sich hin- und herbewegender Kolben (6) angeordnet ist, und in denen je eine Kraftstoffeinspritzeinrichtung (7) einmündet, aus einem Turboverdichter (8) der von der Antriebswelle (3) durch ein die Drehzahl vorzugsweise erhöhendes, sich durch den Zylinder (1) auf der Höhe der Verbindungsstelle erstreckendes (2) Getriebe mechanisch angetrieben wird, wobei die Luftauslässe (9) des Verdichters jeweils mit den Luftansaugrohren (10) eines jeweiligen Zylinderteiles (1) verbunden sind, und aus zwei je mit einem gesteuerten Ventil versehene Auslassöffnungen (11) die jeweils mit einem jeweiligen Auslassrohr (12) verbunden sind, besteht, wobei der Zylinder in an sich bekannter Weise durch eine Ventilatorkühleinrichtung oder einen Wasserkühlkreislauf umgeben ist, und dass im Bereich seines dem Ende des Zylinders (1) zugewandten Endes jeder Kolben (4) eine Beschaufelung (14) aufweist, die sich über die Hälfte des Umfanges erstreckt und an seinem gegenüberliegenden Ende am zur Beschaufelung diametral gegenüberliegenden Umfangsteil der Kolben mit mindestens einem und vorzugsweise zwei identischen Kurvensektoren (15) versehen ist, die abwechselnd wirkende, mit zwei feststehende Führungen (16) zusammenarbeitenden Steuerkurven für den Kolben (4) bilden, und dass die Beschaufelung (14) jedes Kolbens (4) so in das Ende desselben eingearbeitet ist, dass zwischen jeweils zwei nacheinander liegenden Schaufeln jeweils eine Kammer gebildet wird, deren Mündung durch die Innenfläche des Zylinders (1) abgeschlossen ist und deren Dichtheit durch an jeder Schaufelspitze versehene Dichtungsrippen (14') gewährleistet wird, wobei das Gesamtvolumen der Schaufeln dem Volumen der Explosionskammer (5) entspricht.

2. Aufgeladene Brennkraftmaschine nach Anspruch 1, dadurch gekennzeichnet, dass der Kolben (6) der Verdichtungskammer (5) mit einem Ende einer Winkelpleuelstange (17) fest verbunden ist, deren anderes Ende als ein in die kurvenförmige Nut (19) einer drehfest mit der Antriebswelle (3) verbundenen Steuerkurve (20) eingreifender Zapfen ausgebildet ist und dass der Zylinder (1) an seinen zwei Enden durch je eine Dichtungsplatte (21) abgeschlossen ist, wobei die Steuerkurve (20) und auch die Winkelpleuelstange (17) in einem luftdichten Gehäuse (22) angeordnet sind, das mit dem Zylinder (23) der Verdichtungskammer (5) in Verbindung steht.

3. Aufgeladene Brennkraftmaschine nach Anspruch 1, dadurch gekennzeichnet, dass die Steuerung der Auslassventile so erfolgt, dass sie bei jedem zweiten Zyklus während einer 270° Drehung der Kolben (4) offen bleiben, und dass die Sitze dieser Ventile mit Spülöffnungen versehen sind, durch die Kühlluft fliessen kann, die durch ein mit den Luftauslässen der Turboverdichters (8) verbundenes Zweigrohr geliefert wird, so dass beim Auslassvorgang der Sitz und die Schaufeln stets durch Frischluft gespült werden und dass beim nachfolgenden Ansaugvorgang zusätzliche Verbrennungsluft in den Zylinder (1) eingeleitet wird.

4. Aufgeladene Brennkraftmaschine nach Anspruch 1, dadurch gekennzeichnet, dass auf der der Seite mit der Nut (19) abgewandten Seite der Steuerscheibe (20) diese mit einer kreisförmigen Nut (25) versehen ist, die an einem Teil ihres Umfanges als Nocken zur Betätigung eines Ventils (26) ausgebildet ist, das mit dem Rohr (10) verbunden ist, wobei die Verbrennungsluft durch dieses Ventil in den Zylinder (1) bei Rückwärtsbewegung des Kolbens (4) eingeführt wird.

5. Aufgeladene Brennkraftmaschine nach einem der Ansprüche 1 bis 4, dadurch gekennzeichnet, dass der Antrieb (27) des Turboverdichters (8) über eine automatische lösbare Kupplung erfolgt und so mit einer durch die aus jedem Teil des Zylinder strömenden Auspuffgase angetrieben Turbine gekuppelt ist, dass ab Erreichen eines ausreichenden Druckwertes bzw. einer ausreichenden Drehzahl der Antrieb nicht mehr über die Antriebswelle (3) erfolgt.

6. Aufgeladene Brennkraftmaschine nach einem der Ansprüche 1 bis 5, dadurch gekennzeichnet, dass sie aus mehreren Einheiten, Zylinder (37), Kolben (38) besteht, die senkrecht zur Antriebswelle (3) in einer Reihen-, V-, Boxer- oder Sternanordnung montiert werden, und die mit dieser, dank Sekundärantriebswellen (39) und Winkelgetriebe (40) gekuppelt sind, wobei ihre Arbeitszyklen einzel oder zylindergruppenweise versetzt sind, und wobei ihre Explosionskammern (41) jeweils durch eine Turbine eines Turboverdichters (42) mit Doppelturbine gespeist sind, der durch eine lösbare mechanische Kupplung und durch die Auspuffgase angetrieben wird.

7. Aufgeladene Brennkraftmaschine nach Anspruch 5, dadurch gekennzeichnet, dass der mechanisch über ein die Drehzahl erhöhendes Getriebe (27) angetriebene Turboverdichter (8) weiterhin mit einem Gaseinlassrohr (28) für die aus den zwei Abschnitten dieser Zylinder kommenden Abgase versehen ist, wobei dieses Einlassrohr mit den Rohren (12) für den Auslass aus diesen Abschnitten verbunden ist, so dass die Auspuffgase einer den Verdichter (8) antreibenden Turbine zugeführt, wobei die Gase durch ein Rohr (29) entweichen.

8. Aufgeladene Brennkraftmaschine nach einem der Ansprüche 5 bis 7, dadurch gekennzeichnet, dass das Entkoppeln des Getriebes (27) entweder ganz mechanisch über z. B. ein Aggregat der Bauart Freilauf an einem der Zahräder des Getriebes (27) oder unter Anwendung einer Magnetkupplung oder dergleichen, die durch einen Druckkontaktsensor betätigt wird, erfolgen kann.

9. Aufgeladene Brennkraftmaschine nach Anspruch 5, dadurch gekennzeichnet, dass, um schädliche Überdrücke insbesondere bei Ausfall oder mangelhafter Funktion des Auslassventils (30) zu vermeiden, an jedem Zylinderabschnitt ein Sicherheitsventil (31) vor der Explosionskammer (5) angeordnet ist, das im wesentlichen symmetrisch in bezug auf das Auslassventil (30) liegt und das entsprechend den in den Schaufeln (14) der Kolben (4) vorhandenen Druckwerten entweder manuell oder auch eine elektrisch oder elektronische Steuereinrichtung gesteuert wird, und dass dieses Ventil (31) aus einem Ventilkörper (32) trapezförmigen Querschnittes besteht, dessen grosse Basis nach aussen gewandt ist, so dass unter der Druckwirkung der Öffnungsvorgang in Betrieb oder bei angehaltenem Motor mittels eines Führungsschaftes (33) sowie einer Rückholfeder (34), deren Wirkung in an sich bekannter Weise eingestellt werden kann, erleichtert wird.

10. Aufgeladene Brennkraftmaschine nach einem der Ansprüche 5 und 9, dadurch gekennzeichnet, dass zwischen der Explosionskammer (5) und dem Zylinder (1) ein Wippventil (43) zum Schliessen der Entspannungsöffnung der Kammer (5) vorgesehen ist, das entgegen der Wirkung einer Rückholfeder dem Druck der Verbrennungsgase nachgibt, wobei dieses Wippventil mittels eines mit einer Öffnungssteuerkurve (36) zusammenwirkenden Stössels (35) betätigt wird, und wobei die Steuerkurve (36) in dem abgedichteten Gehäuse (22) auf der Scheibe (20) die durch Antriebswelle (3) angetrieben wird, vorgesehen ist, und wobei die Steuerkurve (36) das Ventil (43) während einer 180°-Drehung der Kolben (4), d. h. während der Phase des Ansaugens und des Auffüllens der Kammer (5), offen hält, wobei nach der Explosion der Gasdruck ein zeitweiliges Öffnen des Ventils (43) bewirkt, und zwar dann, wenn zwei nacheinanderfolgende Schaufeln der Beschaufelung (14) an der vorbestimmten Kammer vor der Öffnung der Kammer (5) vorbeibewegt werden.

11. Aufgeladene Brennkraftmaschine nach einem der Ansprüche 1 bis 10, dadurch gekennzeichnet, dass die Einspritzeinrichtung über ein die Drehzahl vermindernde Getriebe so gesteuert wird, dass der Kraftstoff in die Explosionskammer (5) erst bei jeder zweiten Umdrehung erfolgt.

Fig.1

Fig.3

Fig.2

0 069 039

Fig.4

3

Fig. 5

Fig. 6